(19) Europäisches Patentamt
European Patent Office
Office européen des brevets

(11) **EP 3 149 438 B1**

(12) **EUROPEAN PATENT SPECIFICATION**

(45) Date of publication and mention
of the grant of the patent:
**27.05.2020 Bulletin 2020/22**

(21) Application number: **15726262.7**

(22) Date of filing: **22.05.2015**

(51) Int Cl.:
*G01J 9/02* (2006.01)      *G02B 5/04* (2006.01)
*G02B 27/14* (2006.01)

(86) International application number:
**PCT/GB2015/051510**

(87) International publication number:
**WO 2015/181531 (03.12.2015 Gazette 2015/48)**

(54) **A BEAMSPLITTER AND FREQUENCY MONITORING SYSTEM**

STRAHLTEILER UND FREQUENZÜBERWACHUNGSSYSTEM

DIVISEUR DE FAISCEAU ET SYSTÈME DE SURVEILLANCE DE FRÉQUENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.05.2014 GB 201409504
29.05.2014 EP 14275130**

(43) Date of publication of application:
**05.04.2017 Bulletin 2017/14**

(73) Proprietor: **BAE Systems PLC
London SW1Y 5AD (GB)**

(72) Inventor: **LAYCOCK, Leslie Charles
Chelmsford
Essex CM2 8HN (GB)**

(74) Representative: **BAE SYSTEMS plc
Group IP Department
Farnborough Aerospace Centre
Farnborough
Hampshire GU14 6YU (GB)**

(56) References cited:
WO-A1-01/20387      WO-A1-02/090881
US-A- 5 798 859      US-A1- 2005 018 995
US-A1- 2005 259 337      US-A1- 2010 321 807
US-A1- 2011 026 129      US-A1- 2012 182 555

**Description**

The present invention relates to a beamsplitter and particularly, but not exclusively to a beamsplitter for splitting an input beam of radiation which is incident upon the beamsplitter into a first and second output beam of radiation which propagate from the beamsplitter. The present invention further relates to a frequency monitoring system for monitoring a frequency shift of a beam of radiation.

US 2005/259337 A1 (CHEN TONYK [TW] CHEN TONY K T [TW]) discloses a polygonal prism.

US 2010/0321807 A1 (JORNOT ERIC [FR]) discloses a device for sampling a plurality of parts of a light beam.

US 2011/026129 A1 (KUO HUEI PEI [US] ET AL) discloses prism beamsplitters.

WO 01/20387 A1 (CORNING INC [US]) discloses a beamsplitter device producing parallel output beams.

US 2005/018995 A1 (CHANG CHII-HOW [TW] ET AL) discloses a wavelength stabilizing apparatus and control method.

WO 02/090881 A1 (PREC PHOTONICS CORP [US]) discloses a single etalon wavelength locker.

US 2012/182555 A1 (STATZ ERIC R [US] ET AL) discloses a gas detector for atmospheric species detection.

US 5 798 859 A (COLBOURNE PAUL [CA] ET AL) discloses a method and device for wavelength locking.

Optical techniques are often employed for making accurate measurements. For example, the velocity of aircraft may be determined by monitoring frequency shifts between a transmitted laser beam and the laser beam which is scattered from air molecules. Similar techniques are also employed when making weather predictions. However, optical techniques suffer from alignment problems particularly in harsh environments where the optical apparatus may be subject to mechanical vibration or movement. In such conditions, it can be difficult to preserve a level of alignment of laser beams with respect to the optical apparatus, to provide an accurate measurement.

In accordance with the present invention, there is provided a frequency shift monitoring system for monitoring a frequency shift of a beam of radiation, the system comprising:

   a beamsplitter for splitting the beam of radiation which is incident upon the beamsplitter into a first and second output beam of radiation which propagate from the beamsplitter, the beamsplitter comprising:

   -    a first beamsplitting portion for generating the first output beam and a second beamsplitting portion for generating the second output beam;
   -    the first portion comprising a front and rear planar surface orientated in a substantially parallel orientation;
   -    the second portion comprising a front and rear planar surface orientated in a non-parallel orientation;
   -    the rear surface of the first portion comprising a first coating for partially reflecting and partially transmitting radiation propagating onto the rear surface of the first potion from within the beamsplitter;
   -    the front surface of the second portion comprising a second coating for reflecting radiation propagating onto the front surface of the second portion from within the beamsplitter;
   -    such that the first output beam propagates in a first direction and the second output beam propagates in a second direction, the first and second directions being non-parallel;

   an etalon comprising first and second reflecting surfaces for reflecting the first and second output beams;
   a tuning arrangement for varying an optical path length of the first and second output beams through the etalon between the first and second reflecting surfaces; and,
   at least one detector for detecting an intensity of the first and second output beams which is transmitted through the etalon.

The provision of a first beamsplitting portion having parallel surfaces in combination with a second beamsplitting portion having non-parallel surfaces, creates a first and second output beam which propagate in directions which vary only slightly in response to changes in the incident angle of the input beam of radiation upon the beamsplitter. The beamsplitter thus desensitises the variation in output beam direction in comparison with variations in the incident angle.

In an embodiment, the front surface of the first portion comprises an anti-reflection coating for the input beam of radiation. As such the front surface of the first portion is arranged to receive the input beam of radiation and the anti-reflection coating maximises the coupling of radiation into the beamsplitter.

In an embodiment, the rear surface of the second portion comprises an anti-reflection coating for radiation incident thereon internally of the second portion. As such, the rear surface of the second portion is arranged to receive radiation which is reflected from the front surface of the second portion and the anti-reflection coefficient provides that the radiation incident thereon is substantially transmitted.

In an embodiment, the first coating comprises a reflection coefficient of substantially 0.5 for radiation incident thereon internally of the first portion, such that substantially 50% of the energy of the radiation beam which is incident thereon is reflected and substantially 50% of the energy of the radiation beam is transmitted out from the first portion through the rear surface, to form the first output beam.

In an embodiment, the front surface of the second portion comprises a reflection coefficient of substantially 1 for radiation incident thereon internally of the second portion, such that substantially 100% of the energy of the radiation beam which is incident thereon is reflected and substantially 0% of the energy of the radiation beam is transmitted out of the second portion through the front surface.

In an embodiment, the first and second portions comprise separate portions which are welded together using a cement to provide a low loss interface therebetween. However, in an alternative embodiment, the first and second portions may be formed integrally.

In an embodiment, the first and second portions are formed of fused silica.

In an embodiment, the beamsplitter is configured for an input beam incident on the front surface of the first portion and at an operational angle of incidence, wherein a 1 degree variation in angle of incidence does not substantially affect the first direction in which the first output beam propagates, and does not further deviate the second direction in which the second output beam propagates by more than 0.01 degrees.

In an embodiment the beamsplitter has refractive index (n) and is for an input beam incident on the front surface of the first portion and at an angle of incidence ($\theta_i$), and the non-parallel orientation of the second portion subtending an angular displacement angle ($\gamma$), wherein the beamsplitter is configured such that the angular deviation ($\delta$) of the second output beam from the first output beam is $\delta = \sin^{-1}\left\{n\left[\sin\left(2\gamma + \sin^{-1}\left\{\dfrac{\sin\theta_i}{n}\right\}\right)\right]\right\} - \theta_i$.

In an embodiment, the tuning arrangement comprises a refracting element, such as a prism, disposed in an optical path between the beamsplitter and the etalon, the element being rotatably mounted relative to the etalon for steering the first and second output beam relative to the first and second reflecting surfaces.

In an embodiment, the first output beam is directed substantially normal to the first and second reflecting surface and the second output beam is directed at an acute angle to the first and second reflective surface.

In an embodiment, the beamsplitter is orientated relative to the refracting element, such that the first and second output beams are incident upon the element at an angle corresponding to a minimal refraction of the first and second beams through the element.

In an embodiment, the system comprises a first and second detector for respectively detecting the intensity of the first and second output beams which are transmitted through the etalon.

In an embodiment, the system further comprises a processor for processing the intensity of the first and second output beams which are transmitted through the etalon to determine a relative change in intensity, and for subsequently determining a shift in frequency of the beam of radiation in dependence of the relative change in intensity.

Embodiments of the present invention will now be described by way of example only and with reference to the accompanying drawings, in which:

Figure 1 is a schematic illustration of the beam path through a beamsplitter which forms part of an embodiment of the present invention;

Figure 2 is a graphical representation of the variation in deviation angle between the first and second output beams from the beamsplitter illustrated in figure 1, as a function of incident angle;

Figure 3 is a schematic illustration of a frequency monitoring system according to an embodiment of the present invention;

Figure 4 is a graphical representation of the variation in steered angle with incident angle for prisms having different apex angles; and,

Figure 5 is a graphical representation of the variation in steered angle over an incident angle range between $25^0$ and $35^0$, for a prism having a $30^0$ apex angle.

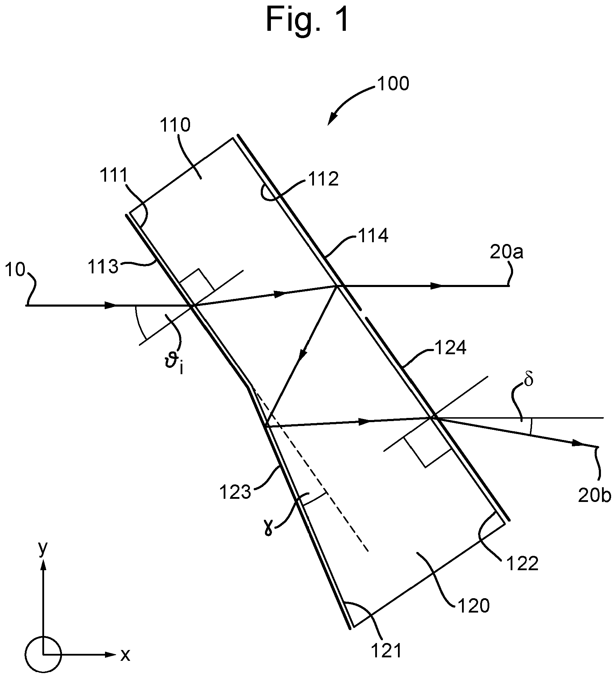

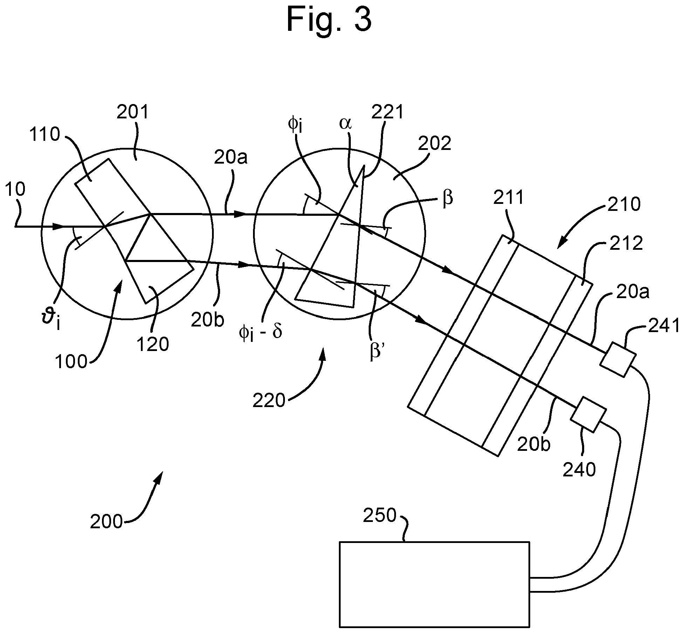

Referring to figure 1 of the drawings, there is illustrated a beamsplitter 100 which forms part of an embodiment of the present invention for generating at least one first and second output beam of radiation 20a, 20b from an input or incident beam of radiation 10. The incident beam of radiation 10 may be that generated by a source of lasing radiation (not shown) and comprise a coherent, collimated laser beam. The beam 10 is directed upon the beamsplitter 100 which is mounted upon a rotation stage 201 (as illustrated in figure 3 of the drawings) for permitting angular rotation of the beamsplitter 100 relative to the incident beam 10.

The beamsplitter 100 is formed of a material, such as fused silica, which is optically transmissive for the wavelength of radiation incident thereon, and comprises a first and second beamsplitting portion 110, 120 for separately generating the first and second output beam 20a, 20b. The first and second portion 110, 120 may be formed separately and physically coupled together using a cement (not shown), which also optically couples the portions to provide for a low loss interface. Alternatively however, the first and second portion 110, 120 may be formed integrally as a single-piece.

The first portion 110 comprises a front and rear substantially planar surface 111, 112, orientated in a substantially parallel orientation, whereas the second portion 120 comprises a front and rear planar surface 121, 122 which extend in a substantially non-parallel arrangement. The front and rear surface 111, 112, 121, 122 of each portion 110, 120 separately extend substantially opposite each other in spaced relation. In an embodiment the rear surface 112, 122 of the first and second portion 110, 120 are coplanar, although the skilled person will recognise from the following description that the rear surface 112, 122 of the first and second portions 110, 120 may be angularly orientated. However, in order to simplify the trajectory of the first and second output beams 20a, 20b for subsequent alignment within an optical system, the front and rear surfaces 111, 112, 121, 122 of the first and second portions 110, 120 preferably extend substantially parallel to a rotational axis of the beamsplitter 100, which is substantially along the z-axis (out of page) illustrated in figure 1.

The front surface 111 of the first portion 110 comprises an anti-reflection coating 113 for the wavelength of incident beam of radiation, to maximise the coupling of the radiation into the first portion 110. The rear surface 112 of the first portion 110 comprises a coating 114 having a reflection coefficient of approximately 0.5, such that approximately 50% of the energy of the beam which is incident upon the rear surface 112 from within the first portion 110 is reflected within the beamsplitter 100 and approximately 50% of the energy is transmitted out from the beamsplitter 100 to form the first output beam 20a.

In contrast, the second portion 120 comprises a front surface 121 having a coating 123 disposed thereon having a reflection coefficient of approximately 1, such that substantially 100% of the radiation which is incident thereon from within the beamsplitter 100 is reflected internally of the beamsplitter 100. The rear surface 122 of the second portion 120 comprises an anti-reflection coating 124 for the wavelength of radiation incident internally thereon, such that substantially all the radiation which is incident on the rear surface 122 is transmitted out from the beamsplitter 100 to form the second output beam 20b. Accordingly, the beamsplitter 100 is arranged to partially reflect the incident beam of radiation 10 at the rear surface 112 of the first portion 110 toward the front surface 121 of the second portion 120, whereupon the radiation subsequently becomes reflected from the front surface 121 of the second portion 120 toward the rear surface 122 and transmitted therethrough as the second output beam 20b.

The parallel orientation of the front and rear surfaces 111, 112 of the first portion 110 results in the first output beam 20a propagating substantially parallel to the incident beam 10. However, the non-parallel orientation of the front and rear surfaces 121, 122 of the second portion 120 results in the second output beam 20b propagating with an angular deviation relative to the first output beam 20a. This angular deviation ($\delta$) is shown below as a function of the angular displacement ($\gamma$) of the front and rear surfaces 121, 122 of the second portion 120 from a parallel orientation, and the angle ($\theta_i$) of the incident beam 10 of radiation relative to the front surface 111 of the first portion 110.

$$\delta = \sin^{-1}\left\{ n\left[ \sin\left( 2\gamma + \sin^{-1}\left\{ \frac{\sin\theta_i}{n} \right\} \right) \right] \right\} - \theta_i \quad (1)$$

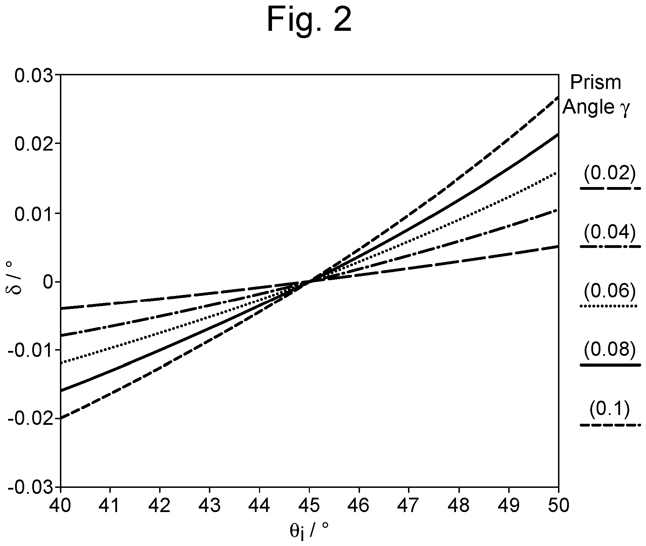

Here n is the refractive index of the beamsplitter, which for fused silica is approximately 1.48. The angular deviation between the first and second output beams 20a, 20b is shown graphically in figure 2 of the drawings, for different angular displacements ($\gamma$) of the front and rear surfaces 121, 122 of the second portion 120 of a beamsplitter 110, which is illuminated with a laser beam having a wavelength of approximately 355nm.

Upon referring to figure 2 it is evident that the angular deviation ($\delta$) can be more finely controlled compared with changes in incident angle ($\theta_i$), and that this degree of sensitivity can be pre-determined by the choice of angular displacement ($\gamma$). For example, differentiating equation 1 with respect to the incident angle ($\theta_i$) yields:

$$\frac{d\delta}{d\theta_i} = \frac{\cos(\delta).\cos\left( 2\gamma + \sin^{-1}\left[ \frac{\sin(\theta_i)}{n} \right] \right)}{\sqrt{1 - \frac{\sin^2(\theta_i)}{n^2}}\sqrt{1 - n^2 \sin^2\left( \frac{2\gamma + \sin^{-1}(\theta_i)}{n} \right)}} \quad (2)$$

Therefore, it is evident from equation 2 that for an angular displacement $\gamma$=0.06$^0$, the angular sensitivity at $\theta_i$ = 45$^0$,

namely the variation in angular deviation ($\delta$) per $1^0$ variation in incident angle ($\theta_i$) is $0.0027^0$.

The fine angular control offered by the beamsplitter 10 can be used to monitor for small frequency shifts and variations in the incident laser beam 10. Referring to figure 3 of the drawings there is illustrated a frequency monitoring system 200 according to an embodiment of the present invention, for monitoring for such variations in frequency. The system 200 comprises a beamsplitter 100 as described above (and as such, like features have been referenced using the same numerals) and an etalon 210, such as a Fabry Perot etalon comprising a first and second reflecting surface 211, 212 arranged in spaced relation. The reflecting surfaces 211, 212 are disposed adjacent each other in a substantially parallel orientation, and arranged to reflect radiation back and forth therebetween.

The etalon 210 is orientated relative to the beamsplitter 100, such as by effecting rotation the beamsplitter 100 using the rotation stage 201, such that the first output beam 20a propagates substantially normal to the reflecting surfaces 211, 212, whereas the second output beam 20b is incident at an acute angle thereto, namely the deviation angle $\delta$. However, it is to be appreciated that the first output beam 20a may alternatively be directed at an acute angle to the reflecting surfaces 211, 212. The system 200 further comprises a tuning arrangement 220 for varying an optical path length of the first and second output beams 20a, 20b between the first and second reflecting surfaces 211, 212. This path length is varied to tune the etalon 210 to a particular resonant condition, in which the path length between the reflecting surfaces 211, 212 substantially matches an integral number of wavelengths, to facilitate a transmission of radiation through the etalon 210.

The etalon 210 is tuned so that the first output beam 20a which propagates normally to the reflecting surfaces 211, 212, comprises an optical path length which is slightly less than an integral number of wavelengths, whereas the second output beam 20b which propagates at an acute angle with respect to the reflecting surfaces 211, 212, comprises an optical path length which is slightly greater than the integral number of wavelengths (namely slightly above a resonant condition). In this respect, the etalon 210 is tuned so that the first and second output beams 20a, 20b comprise an optical path length through the etalon 210 which is either side of resonant condition.

The first and second beam 20a, 20b which pass out from the etalon 210 are collected at a detector. In a preferred embodiment, the system 200 comprises two detectors 240, 241 for separately receiving radiation from each beam 20a, 20b and for detecting an intensity of each beam 20a, 20b. The or each detector 240, 241 is communicatively coupled to a processor 250 which is arranged to process signals from the or each detector 240, 241. The signals communicated to the processor 250 are representative of the intensity of the detected radiation beam and these signals are processed by the processor 250 to determine a relative intensity between the beams of radiation. Any variation in the frequency of the beam 10 of radiation which is incident upon the beamsplitter 100 manifests as a variation in the relative intensity of the first and second output beams 20a, 20b detected at the or each detector 240, 241, owing to the disposition of the first and second beams 20a, 20b either side of a resonant condition. The change in relative intensity can then be equated to a relative change in frequency of the laser beam 10 incident upon the beamsplitter 100.

In an embodiment, the tuning arrangement 220 comprises a refracting optical element 221 disposed within an optical path between the beamsplitter 100 and the etalon 210. The refracting optical element 221, such as a prism, is mounted upon a rotation stage 202 for separate rotation of the element 221 relative to the beamsplitter 100, and the element 221 is arranged to receive the first and second output beams 20a, 20b from the beamsplitter 100. The element 221 is orientated relative to the beamsplitter 100 such that the first and second output beams 20a, 20b become incident upon the element 221 at an angle which corresponds substantially with an angle that offers minimal refraction through the element 221. By rotating the stage 202 upon which the element 221 is disposed, it is possible to steer the first and second output beams 20a, 20b toward the etalon 210, such that the respective path lengths become disposed either side of a resonant path length condition. However, it is to be appreciated that other tuning arrangements 220 may also be used and would be apparent to the skilled addressee, to vary the optical path length between the reflecting surfaces 211, 212 of the etalon 210. For example, the tuning arrangement 220 may comprise a translation stage (not shown) for moving the reflecting surfaces 211, 212 relative to the other to effect a physical separation of the reflecting surfaces 211, 212, means (not shown) adjusting a pressure in a gas medium between the reflecting surfaces 211, 212 and/or means (not shown) for varying a temperature of the medium between the reflecting surfaces 211, 212. However, it is found that varying a physical separation of the reflecting surfaces 211, 212 would result in mechanical instabilities, while the latter two methods are found to be time consuming. Accordingly, the following description is based on a tuning arrangement 220 comprising a refracting element 221, namely a prism, since as will be shown below, the prism can itself be rotated to manipulate the propagation direction of the first and second output beams 20a, 20b to the etalon 210 and is less susceptible to mechanical instabilities. In this respect, the beamsplitter and tuning arrangement can be used to offer fine angular control of the output beams 20a, 20b and substantially preserve the relative alignment of the beams 20a, 20b.

The steered angle ($\beta$) of the first and second output beam 20a, 20b relative to the prism 221 is shown below in equation 3 as a function of the incident angle ($\Phi_i$) upon a prism 221 having a prism apex angle ($\alpha$).

$$\beta = \sin^{-1}\left\{ n \cdot \sin\left[ \alpha - \sin^{-1}\left(\frac{\sin \phi_i}{n}\right)\right]\right\} + \phi_i - \alpha \qquad (3)$$

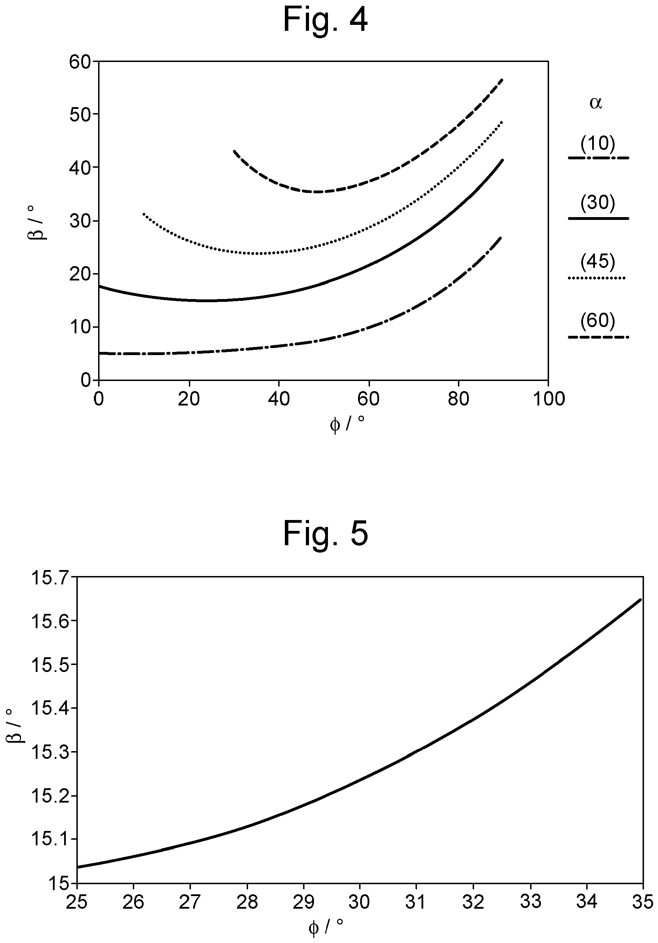

Figure 4 of the drawings provides a graphical representation of the variation in steered angle ($\beta$) with incident angle ($\Phi_i$) for fused silica prisms having different apex angles ($\alpha$). Differentiating equation 3 with respect to incident angle ($\Phi_i$), yields the relationship:

$$\frac{d\beta}{d\phi_i} = 1 - \frac{\cos\left(\phi_i\right)\cos\left(\alpha - \sin^{-1}\left[\frac{\sin \phi_i}{n}\right]\right)}{\sqrt{\left(1 - \frac{\sin^2 \phi_i}{n^2}\right)\left(1 - n^2 \sin^2\left[\alpha - \sin^{-1}\left\{\frac{\sin \phi_i}{n}\right\}\right]\right)}} \qquad (4)$$

It is evident therefore that at an incident angle $\Phi_i = 30^0$ and for a fused silica prism having a refractive index of approximately 1.48, then each degree of rotation of the prism 221 results in a change in the steered angle of only $0.06^0$. Upon referring to figure 5 of the drawings, which illustrates the variation in steered angle ($\beta$) for incident angles ($\Phi_i$) in the range of $25^0$ to $35^0$ it is clear that a fine adjustment in the steered angle can be obtained by varying the incident angle $\Phi_i$ and thus the angular orientation of the prism 221.

From the foregoing therefore, it is evident that the beamsplitter and frequency monitoring system offer an improved stability and fine control over the angular deviation of beams of radiation.

**Claims**

1. A frequency shift monitoring system for monitoring a frequency shift of a beam of radiation, the system comprising:

   a beamsplitter (100) for splitting the beam of radiation (10) which is incident upon the beamsplitter (100), into a first and second output beam (20a, 20b) of radiation which propagate from the beamsplitter (100), the beamsplitter (100) comprising:

   - a first beamsplitting portion (110) for generating the first output beam (20a) and a second beamsplitting portion (120) for generating the second output beam (20b);
   - the first portion (110) comprising a front and rear planar surface (111, 112) orientated in a substantially parallel orientation;
   - the second portion (120) comprising a front and rear planar surface orientated (121, 122) in a non-parallel orientation;
   - the rear surface (112) of the first portion (110) comprising a first coating (114) for partially reflecting and partially transmitting radiation propagating onto the rear surface (112) of the first potion (110) from within the beamsplitter (100),
   - the front surface (121) of the second portion (120) comprising a second coating (123) for reflecting radiation propagating onto the front surface (121) of the second portion (120) from within the beamsplitter (100);
   - such that the first output beam (20a) propagates in a first direction and the second output beam (20b) propagates in a second direction, the first and second directions being non-parallel.

   an etalon (210) comprising first and second reflecting surfaces (211, 212) for reflecting the first and second output beams (20a, 20b);
   a tuning arrangement (220) for varying an optical path length of the first and second output beams (20a, 20b) through the etalon (210) between the first and second reflecting surfaces (211, 212); and,
   at least one detector (240) for detecting an intensity of the first and second output beams (20a, 20b) which is transmitted through the etalon (210).

2. A frequency shift monitoring system according to claim 1, wherein the front surface (111) of the first portion (110) comprises an anti-reflection coating (113) for the input beam of radiation and/or the rear surface (122) of the second portion (120) comprises an anti-reflection coating (124) for radiation incident thereon internally of the second portion (120).

3. A frequency shift monitoring system according to any preceding claim, wherein the first coating comprises a reflection coefficient of substantially 0.5 for radiation incident thereon internally of the first portion, such that substantially 50% of the energy of the radiation beam which is incident thereon is reflected and substantially 50% of the energy of the radiation beam is transmitted out from the first portion through the rear surface, to form the first output beam.

4. A frequency shift monitoring system according to any preceding claim, wherein the front surface of the second portion comprises a reflection coefficient of substantially 1 for radiation incident thereon internally of the second portion, such that substantially 100% of the energy of the radiation beam which is incident thereon is reflected and substantially 0% of the energy of the radiation beam is transmitted out of the second portion through the front surface.

5. A frequency shift monitoring system according to any preceding claim, wherein the first and second portions comprise separate portions which are coupled together to provide a low loss interface therebetween.

6. A frequency shift monitoring system according to any of claims 1 to 4, wherein the first and second portions be formed integrally.

7. A frequency shift monitoring system according to any preceding claim, wherein the first and second portions are formed of fused silica.

8. A frequency shift monitoring system according to any preceding claim, the beamsplitter being configured for an input beam incident on the front surface of the first portion and at an operational angle of incidence, wherein a 1 degree variation in angle of incidence does not substantially affect the first direction in which the first output beam propagates, and does not further deviate the second direction in which the second output beam propagates by more than 0.01 degrees.

9. A frequency shift monitoring system according to any one of the preceding claims the beamsplitter having refractive index (n) and being for an input beam incident on the front surface of the first portion and at an angle of incidence ($\theta_i$), and the non-parallel orientation of the second portion subtending an angular displacement angle ($\gamma$), wherein the beamsplitter is configured such that the angular deviation ($\delta$) of the second output beam from the first output beam is $\delta = \sin^{-1}\left\{ n\left[ \sin\left( 2\gamma + \sin^{-1}\left\{ \frac{\sin\theta_i}{n} \right\} \right) \right] \right\} - \theta_i$.

10. A frequency shift monitoring system according to any preceding claim, wherein the tuning arrangement comprises a refracting element, disposed in an optical path between the beamsplitter and the etalon, the element being rotatably mounted relative to the etalon for steering the first and second beam relative to the first and second reflecting surfaces.

11. A frequency shift monitoring system according to any preceding claim, wherein the first output beam is directed substantially normal to the first and second reflecting surface and the second output beam is directed at an acute angle to the first and second reflective surface.

12. A frequency shift monitoring system according to any preceding claim, wherein the beamsplitter is orientated relative to the refracting element, such that the first and second output beams are incident upon the element at an angle corresponding to a minimal refraction of the first and second beams through the element.

13. A frequency shift monitoring system according to any preceding claim, wherein the system comprises a first and second detector for respectively detecting the intensity of the first and second output beams which are transmitted through the etalon.

14. A frequency shift monitoring system according to any preceding claim, further comprising a processor for processing the intensity of the first and second output beams which are transmitted through the etalon to determine a relative change in intensity, and for subsequently determining a shift in frequency of the beam of radiation in dependence of the relative change in intensity.

**Patentansprüche**

1. System zur Überwachung einer Frequenzschiebung eines Strahls, wobei das System umfasst:

   einen Strahlteiler (100) zur Teilung des Strahls (10), der auf den Strahlteiler (100) einfällt, in einen ersten und einen zweiten Ausgangsstrahl (20a, 20b), die sich, vom Strahlteiler (100) ausgehend, ausbreiten, wobei der Strahlteiler (100) umfasst:

   - einen ersten Strahlteilungsabschnitt (110) zur Erzeugung des ersten Ausgangsstrahls (20a) und einen zweiten Strahlteilungsabschnitt (120) zur Erzeugung des zweiten Ausgangsstrahls (20b),
   - wobei der erste Abschnitt (110) eine planare Vorderseiten- und Rückseitenfläche (111, 112), die im Wesentlichen parallel orientiert sind;
   - wobei der zweite Abschnitt (120) eine planare Vorderseiten- und Rückseitenfläche (121, 122), die im Wesentlichen nicht parallel orientiert sind;
   - wobei die Rückseitenfläche (112) des ersten Abschnitts (110) eine erste Beschichtung (114) umfasst, um die sich vom Inneren des Strahlteilers (100) her auf die Rückseitenfläche (112) des ersten Abschnitts (110) ausbreitende Strahlung zum Teil zurückzustrahlen und zum Teil zu übertragen,
   - wobei die Vorderseitenfläche (121) des zweiten Abschnitts (120) eine zweite Beschichtung (123) umfasst, um die sich vom Inneren des Strahlteilers (100) her auf die Vorderseitenfläche (121) des ersten Abschnitts (120) ausbreitende Strahlung zurückzustrahlen
   - so dass sich der erste Ausgangsstrahl (20a) in einer ersten Richtung ausbreitet und sich der zweite Ausgangsstrahl (20b) in einer zweiten Richtung ausbreitet, wobei die ersten und zweiten Richtungen nicht parallel sind,

   ein Etalon (210), umfassend erste und zweite reflektierende Oberflächen (211, 212) zum Reflektieren der ersten und zweiten Ausgangsstrahlen (20a, 20b);
   eine Abstimmungsanordnung (220) zum Variieren einer Länge eines Strahlengangs der ersten und zweiten Ausgangsstrahlen (20a, 20b) durch das Etalon (210) zwischen den ersten und zweiten reflektierenden Oberflächen (211, 212); und
   mindestens einen Detektor (240) zur Erkennung einer Intensität der ersten und zweiten Ausgangsstrahlen (20a, 20b), die durch das Etalon (210) hindurch übertragen wird.

2. System nach Anspruch 1, wobei die Vorderseitenfläche (111) des ersten Abschnitts (110) eine Antireflexbeschichtung (113) für den Eingangsstrahl umfasst und/oder die Rückseitenfläche (122) des zweiten Abschnitts (120) eine Antireflexbeschichtung (124) für die im Inneren des zweiten Abschnitts (120) darauf einfallende Strahlung.

3. System nach einem der vorstehenden Ansprüche, wobei die erste Beschichtung einen Reflexionsfaktor im Wesentlichen gleich 0,5 für die im Inneren des ersten Abschnitts darauf einfallende Strahlung umfasst, so dass im Wesentlichen 50 % der Energie des darauf einfallenden Strahls zurückgestrahlt wird und im Wesentlichen 50 % der Energie des Strahls aus dem ersten Abschnitt durch die Rückseitenfläche übertragen wird, um den ersten Ausgangsstrahl zu bilden.

4. System nach einem der vorstehenden Ansprüche, wobei die Vorderseitenfläche des zweiten Abschnitts einen Reflexionsfaktor im Wesentlichen gleich 1 für die im Inneren des ersten Abschnitts darauf einfallende Strahlung umfasst, so dass im Wesentlichen 100% der Energie des darauf einfallenden Strahls zurückgestrahlt wird und im Wesentlichen 0% der Energie des Strahls aus dem zweiten Abschnitt durch die Vorderseitenfläche übertragen wird, um den ersten Ausgangsstrahl zu bilden.

5. System nach einem der vorstehenden Ansprüche, wobei die ersten und zweiten Abschnitte getrennte abschnitte umfassen, die miteinander gekuppelt sind, um dazwischen eine verlustarme Schnittstelle zu bilden.

6. System nach einem der Ansprüche 1 - 4, wobei die ersten und zweiten Abschnitte integral ausgebildet sind.

7. System nach einem der vorstehenden Ansprüche, wobei die ersten und zweiten Abschnitte aus Quarzglas bestehen.

8. System nach einem der vorstehenden Ansprüche, wobei der Strahlteiler auf einen auf die Vorderseitenfläche des ersten Abschnitts in einem Betriebseinfallswinkel einfallenden Strahl ausgelegt ist, wobei eine Variation des Einfallswinkels um 1 ° keinen erheblichen Einfluss auf die erste Richtung hat, in der sich der erste Ausgangsstrahl ausbreitet, und keine weitere Abweichung der zweiten Richtung, in der sich der zweite Ausgangsstrahl ausbreitet, um mehr als 0,01 ° bewirkt.

9. System nach einem der vorstehenden Ansprüche, wobei der Strahlteiler einen Brechungsindex (n) aufweist und für einen auf die Vorderseitenfläche des ersten Abschnitts in einem Einfallswinkel ($\theta$i) einfallenden Eingangsstrahl besteht ist und die nicht parallele Orientierung des zweiten Abschnitts einem Winkelverschiebungswinkel ($\gamma$) gegenüberliegt,

wobei der Strahlteiler derart konfiguriert ist, dass die Winkelabweichung ($\delta$) des zweiten Ausgangsstrahls vom ersten Ausgangsstrahl folgender Gleichung entspricht:

$$\delta = \sin^{-1}\left\{ n\left[ \sin\left( 2\gamma + \sin^{-1}\left\{ \frac{\sin \theta_i}{n} \right\} \right) \right] \right\} - \theta_i \, .$$

10. System nach einem der vorstehenden Ansprüche, wobei die Abstimmungsanordnung einen Brechungskörper umfasst, der in einem Strahlengang zwischen Strahlteiler und Etalon angeordnet ist, wobei der Brechungskörper in Bezug auf das Etalon rotierbar montiert ist, um den ersten und zweiten Strahl in Bezug auf die erste und zweite reflektierende Oberfläche zu lenken.

11. System nach einem der vorstehenden Ansprüche, wobei der erste Ausgangsstrahl im Wesentlichen normal zur ersten und zweiten reflektierenden Oberfläche gerichtet ist und der zweite Ausgangsstrahl in einem spitzen Winkel zur ersten und zweiten reflektierenden Oberfläche gerichtet ist.

12. System nach einem der vorstehenden Ansprüche, wobei der Strahlteiler in Bezug auf den Brechungskörper derart orientiert ist, dass der erste und zweite Ausgangsstrahl in einem Winkel auf den Brechungskörper einfallen, der einer minimalen Brechung des ersten und zweiten Strahls durch den Brechungskörper entspricht.

13. System nach einem der vorstehenden Ansprüche, wobei das System einen ersten und zweiten Detektor jeweils zur Erkennung der Intensität der durch das Etalon übertragenen ersten und zweiten Ausgangsstrahlen umfasst.

14. System nach einem der vorstehenden Ansprüche, ferner umfassend einen Prozessor zur Verarbeitung der Intensität der durch das Etalon übertragenen ersten und zweiten Ausgangsstrahlen, um eine relative Änderung bei der Intensität zu ermitteln und anschließend eine Frequenzverschiebung des Strahls in Abhängigkeit der relativen Intensitätsänderung zu ermitteln.

**Revendications**

1. Système de surveillance de déplacement de fréquence destiné à surveiller un déplacement de fréquence d'un faisceau de rayonnement, le système comprenant :

un diviseur de faisceau (100) destiné à diviser le faisceau d'un rayonnement (10) qui est incident sur le diviseur de faisceau (100) en un premier et un second faisceau de sortie (20a, 20b) de rayonnement qui se propagent depuis le diviseur de faisceau (100), le diviseur de faisceau (100) comprenant :

- une première partie de division de faisceau (110) destinée à générer le premier faisceau de sortie (20a) et une seconde partie de division de faisceau (120) destinée à générer le second faisceau de sortie (20b) ;
- la première partie (110) comprenant des surfaces planes avant et arrière (111, 112) orientées dans une orientation sensiblement parallèle ;
- la seconde partie (120) comprenant des surfaces planes avant et arrière (121, 122) orientées dans une orientation non parallèle ;
- la surface arrière (112) de la première partie (110) comprenant un premier revêtement (114) destiné à réfléchir partiellement et à transmettre partiellement le rayonnement se propageant sur la surface arrière (112) de la première partie (110) depuis l'intérieur du diviseur de faisceau (100),
- la surface avant (121) de la seconde partie (120) comprenant un second revêtement (123) destiné à réfléchir le rayonnement se propageant sur la surface avant (121) de la seconde partie (120) depuis l'intérieur du diviseur de faisceau (100) ;
- de telle sorte que le premier faisceau de sortie (20a) se propage dans une première direction et que le second faisceau de sortie (20b) se propage dans une seconde direction, les première et seconde directions étant non parallèles,

un étalon (210) comprenant des première et seconde surfaces réfléchissantes (211, 212) destiné à réfléchir les premier et second faisceaux de sortie (20a, 20b) ;
un agencement de réglage (220) destiné à faire varier une longueur de trajet optique des premier et second faisceaux de sortie (20a, 20b) par l'intermédiaire de l'étalon (210) entre les première et seconde surfaces réfléchissantes (211, 212) ; et
au moins un détecteur (240) destiné à détecter une intensité des premier et second faisceaux de sortie (20a, 20b) qui est transmise par l'intermédiaire de l'étalon (210).

2. Système de surveillance de déplacement de fréquence selon la revendication 1, dans lequel la surface avant (111) de la première partie (110) comprend un revêtement antireflet (113) pour le faisceau de rayonnement d'entrée et/ou la surface arrière (122) de la seconde partie (120) comprend un revêtement antireflet (124) pour le rayonnement incident sur celle-ci à l'intérieur de la seconde partie (120).

3. Système de surveillance de fréquence selon l'une quelconque des revendications précédentes, dans lequel le premier revêtement comprend un coefficient de réflexion sensiblement égal à 0,5 pour le rayonnement incident sur celui-ci à l'intérieur de la première partie, de telle sorte que sensiblement 50 % de l'énergie du faisceau de rayonnement qui est incident sur celui-ci est réfléchie et que sensiblement 50 % de l'énergie du faisceau de rayonnement est transmise vers l'extérieur depuis la première partie par l'intermédiaire de la surface arrière, former le premier faisceau de sortie.

4. Système de surveillance de déplacement de fréquence selon l'une quelconque des revendications précédentes, dans lequel la surface avant de la seconde partie comprend un coefficient de réflexion sensiblement égal à 1 pour le rayonnement incident sur celle-ci à l'intérieur de la seconde partie, de telle sorte que sensiblement 100 % de l'énergie du faisceau de rayonnement qui est incident sur celle-ci est réfléchie et que sensiblement 0 % de l'énergie du faisceau de rayonnement est transmise vers l'extérieur de la seconde partie par l'intermédiaire de la surface avant.

5. Système de surveillance de déplacement de fréquence selon l'une quelconque des revendications précédentes, dans lequel les première et seconde parties comprennent des parties séparées qui sont couplées ensemble pour fournir une interface à faible perte entre elles.

6. Système de surveillance de déplacement de fréquence selon l'une quelconque des revendications 1 à 4, dans lequel les première et seconde parties sont formées d'un seul tenant.

7. Système de surveillance de déplacement de fréquence selon l'une quelconque des revendications précédentes, dans lequel les première et seconde parties sont formées de silice fondue.

8. Système de surveillance de déplacement de fréquence selon l'une quelconque des revendications précédentes, le diviseur de faisceau étant configuré pour un faisceau d'entrée incident sur la surface avant de la première partie et à un angle d'incidence opérationnel, dans lequel une variation de 1 degré de l'angle d'incidence n'affecte pas sensiblement la première direction dans laquelle se propage le premier faisceau de sortie, et ne dévie pas en outre la seconde direction dans laquelle le second faisceau de sortie se propage de plus de 0,01 degré.

9. Système de surveillance de déplacement de fréquence selon l'une quelconque des revendications précédentes, le diviseur de faisceau ayant un indice de réfraction (n) et étant destiné à un faisceau d'entrée incident sur la surface avant de la première partie et à un angle d'incidence ($\theta_i$), et l'orientation non parallèle de la seconde partie sous-tendant un angle de déplacement angulaire ($\gamma$), dans lequel le diviseur de faisceau est configuré de telle sorte que l'écart angulaire ($\delta$) du second faisceau de sortie à partir du premier faisceau de sortie est

$$\delta = \sin^{-1}\left\{ n\left[ \sin\left( 2\gamma + \sin^{-1}\left\{ \frac{\sin\theta_i}{n} \right\} \right) \right] \right\} - \theta_i.$$

**10.** Système de surveillance de déplacement de fréquence selon l'une quelconque des revendications précédentes, dans lequel l'agencement de réglage comprend un élément de réfraction, disposé dans un trajet optique entre le diviseur de faisceau et l'étalon, l'élément étant monté de manière rotative par rapport à l'étalon pour diriger le premier et le second faisceau par rapport aux première et seconde surfaces réfléchissantes.

**11.** Système de surveillance de déplacement de fréquence selon l'une quelconque des revendications précédentes, dans lequel le premier faisceau de sortie est dirigé sensiblement perpendiculairement à la première et à la seconde surface réfléchissante et le second faisceau de sortie est dirigé à un angle aigu par rapport à la première et à la seconde surface

**12.** Système de surveillance de déplacement de fréquence selon l'une quelconque des revendications précédentes, dans lequel le diviseur de faisceau est orienté par rapport à l'élément de réfraction, de telle sorte que les premier et second faisceaux de sortie sont incidents sur l'élément à un angle correspondant à une réfraction minimale des premier et second faisceaux par l'intermédiaire de l'élément.

**13.** Système de surveillance de déplacement de fréquence selon l'une quelconque des revendications précédentes, dans lequel le système comprend un premier et un second détecteur destiné à détecter respectivement l'intensité des premier et second faisceaux de sortie qui sont transmis par l'intermédiaire de l'étalon.

**14.** Système de surveillance de déplacement de fréquence selon l'une quelconque des revendications précédentes, comprenant un processeur destiné à traiter l'intensité des premier et second faisceaux de sortie qui sont transmis par l'intermédiaire de l'étalon pour déterminer un changement relatif d'intensité, et destiné à déterminer ensuite un déplacement en fréquence du faisceau de rayonnement en fonction du changement relatif d'intensité.

# Fig. 1

# Fig. 2

# Fig. 3

# Fig. 4

# Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005259337 A1
- US 20100321807 A1
- US 2011026129 A1
- WO 0120387 A1
- US 2005018995 A1
- WO 02090881 A1
- US 2012182555 A1
- US 5798859 A